# EUROPÄISCHE PATENTSCHRIFT

(11) **EP 1 748 526 B1**
(45) Veröffentlichungstag und Bekanntmachung des Hinweises auf die Patenterteilung: **08.04.2009**
(21) Anmeldenummer: 06010572.3
(22) Anmeldetag: 23.05.2006
(51) Int. Cl.: H02G 3/00, H02G 3/16, H05K 7/14

(54) **Sensorkombination**
Combined sensor
Capteur combiné

(30) Priorität: 28.07.2005 DE 102005035268
(43) Veröffentlichungstag der Anmeldung: 31.01.2007
(73) Patentinhaber: Insta Elektro GmbH, 58511 Lüdenscheid (DE)
(72) Erfinder: Donat, Nobert, 58553 Halver (DE); Stecura, Darius, 45731 Waltrop (DE); Stöhr, Frank Axel, 42477 Radevormwald (DE); Rauterkus, Frank, 57439 Attendorn (DE)

(56) Entgegenhaltungen:
- EP-A- 0 772 132
- DE-A1- 10 011 160

## Beschreibung

Die vorliegende Erfindung geht von einer gemäß Oberbegriff des Hauptanspruches konzipierten Sensorkombination aus.

Derartige Sensorkombinationen der Gebäudesystemtechnik sind dafür vorgesehen, damit der Benutzer über ein Bussystem mit entsprechenden Aktoren verschiedenste Funktionen, wie die Beeinflussung der Lichtanlage, der Rollos, der Heizung usw. auf einfache und komfortable Art und Weise bedarfsgerecht vornehmen kann. In der Regel ist dabei jedem Sensor und jedem Aktor zur Anbindung an das Bussystem des Gebäudes ein eigener Busankoppler zugeordnet, was entsprechend aufwendig und teuer ist.

Eine dem Oberbegriff des Hauptanspruches entsprechende Sensorkombination ist durch die EP 0 772 132 B1 bekannt geworden. Bei dieser Sensorkombination sind zwei unmittelbar nebeneinander angeordnete Sensoren über eine Leitung derart miteinander verbunden, so dass beide Sensoren über einen einzigen gemeinsamen Busankoppler mit dem Bussystem des Gebäudes in Verbindung stehen. Bei einer derartigen Ausbildung besteht lediglich die Möglichkeit, zwei in direkter Nachbarschaft befindliche Sensoren über einen gemeinsamen Busankoppler an das Bussystem des Gebäudes anzubinden. Außerdem ist der den Busankoppler aufweisende Sensor mit mehreren Leiterplatten ausgerüstet, damit der Busankoppler und die übrigen Funktionsbauteile untergebracht werden können. Eine solche Ausbildung ist somit nicht nur entsprechend aufwendig und teuer, sondern benötigt zu ihrer Installation zudem entsprechend viel Platz der oftmals in üblichen Standard-Unterputzdosen nicht zur Verfügung steht.

Der vorliegenden Erfindung liegt deshalb die Aufgabe zugrunde, eine Sensorkombination zu schaffen, die sich kostengünstig aus besonders wenigen Einzelteilen herstellen lässt und die eine besonders kompakte Bauform aufweist, so dass sich diese komfortabel, d. h. ohne besonderen Aufwand in eine übliche Standard-Unterputzdose installieren lässt.

Erfindungsgemäß wird diese Aufgabe durch die im Hauptanspruch angegebenen Merkmale gelöst.

Bei einer solchen Ausbildung der Sensorkombination ist besonders vorteilhaft, dass auch mehrere entfernt voneinander angeordnete Sensoren auf kostengünstige Art und Weise über einen einzigen Busankoppler an das Bussystem des Gebäudes angebunden werden können. Wenn der Busankoppler einen symmetrische Aufbau aufweist, können Vorteilhafterweise auch Entfernungen von bis zu 100m zwischen dem ersten Sensor und zumindest einem weiteren Sensor problemlos überbrückt werden.

Weitere vorteilhafte Ausgestaltungen des erfindungsgemäßen Gegenstandes sind in den übrigen Unteransprüchen angegeben. Anhand eines Ausführungsbeispieles sei die Erfindung im Prinzip näher erläutert. Dabei zeigen:
- Fig. 1:: prinziphaft eine erste Sensorkombination im Vollschnitt;
- Fig. 2:: prinziphaft den Aufbau eines symmetrisch aufgebauten Busankopplers.

Wie aus den Figuren hervorgeht, besteht eine solche Sensorkombination im Wesentlichen aus einem ersten Sensor 1 und mehreren weiteren Sensoren 2 bis n, welche datentechnisch miteinander in Verbindung stehen. Der erste Sensor 1 weist außer seinen Bedien- und/oder Anzeigeelementen 3 einen einzigen Busankoppler 4 zur Ankopplung an das Bussystem 5 des Gebäudes auf. Dieser einzige Busankoppler 4 steht über Nebenstellenleitungen 6 mit den weiteren Sensoren 2 bis n derart in Verbindung, so dass diese ebenfalls über den einzigen Busankoppler 4 an das Bussystem 5 des Gebäudes angebunden sind. Für den ersten Sensor 1 und die weiteren Sensoren 2 bis n ist somit gemeinsam nur ein einziger Busankoppler 4 für die Anbindung an das Bussystem 5 des Gebäudes notwendig. Die Ausbildung einer solchen Sensorkombination führt zu einer erheblichen Kosteneinsparung.

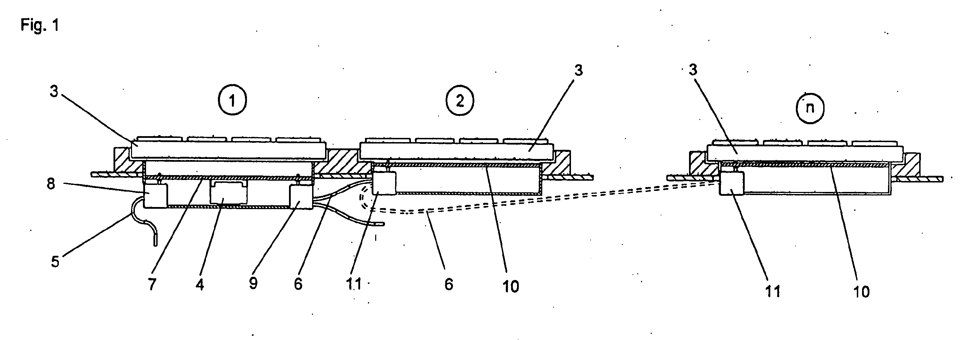

Wie insbesondere aus Figur 1 hervorgeht, weist der erste Sensor 1 nur eine einzige Leiterplatte 7 auf. Die Leiterplatte 7 ist zum einen für die Anbindung bzw. die Verknüpfung der Bedien- und/oder Anzeigeelemente 3 vorgesehen und weist zum anderen eine Busschnittstelle 8 zum Anschluss an das Bussystem 5 des Gebäudes, den einzigen Busankoppler 4 sowie eine Leitungsschnittstelle 9 zum Anschluss von Nebenstellenleitungen 6 auf. Auch die weiteren Sensoren 2 bis n weisen jeweils nur eine einzige Leiterplatte 10 auf, die einerseits zur Anbindung bzw. zur Verknüpfung mit den Bedien- und/oder Anzeigeelementen 3 vorgesehen ist und die andererseits jeweils eine weitere Leitungsschnittstelle 11 zum Anschluss von Nebenstellenleitungen 6 aufweist. Die Bedien- und/oder Anzeigeelemente 3 des ersten Sensors 1 sowie die Bedien- und/oder Anzeigeelemente 3 der weiteren Sensoren 2 bis n sind jeweils zu einem Anwendungsmodul zusammengefasst, welche prinzipiell den selben Aufbau aufweisen. Über eine Anwendungsschnittstelle sind die Bedien- und/oder Anzeigeelemente 3 mit der Leiterplatte 7 des ersten Sensors 1 bzw. jeweils mit der Leiterplatte 10 der weiteren Sensoren 2 bis n verbindbar. Ein derartiger Aufbau des ersten Sensors 1 und der weiteren Sensoren 2 bis n führt zu einer besonders kompakten Bauform, so dass sich die Sensoren 1 und 2 bis n komfortabel, d. h. ohne besonderen Aufwand in eine übliche Standard-Unterputzdose installieren lassen.

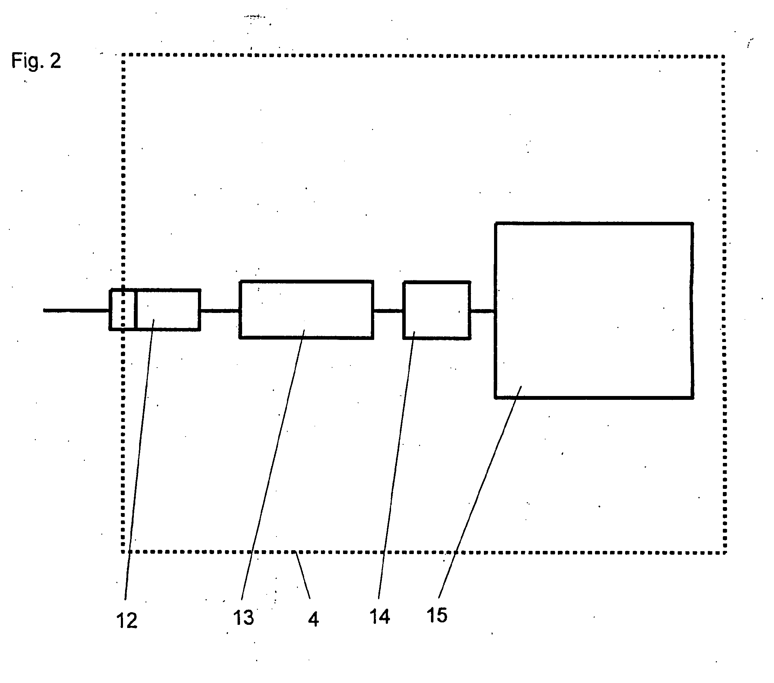

Wie insbesondere aus Figur 2 hervorgeht, besteht der einzige Busankoppler 4 des ersten Sensors 1 im Wesentlichen aus vier Baugruppen, nämlich dem Busanschluss 12, dem Übertrager 13, einem ASIC 14 und einem Mikrocontroller 15. Der einzige Busankoppler 4 des ersten Sensors 1 ist galvanisch mit dem Bussystem 5 des Gebäudes verbunden, wobei die Ein- und Auskopplung der überlagerten Signale durch den Übertrager 13 erfolgt, dessen Primärwicklung in zwei Teilwicklungen aufgeteilt ist. Eine derartige Übertragertechnik hat den wesentlichen Vorteil, dass die Masseleitung galvanisch von der eigentlichen Busleitung entkoppelt ist und daher der Anschluss von relativ langen Nebenstellenleitungen 6 ermöglicht und eine hohe Gleichtaktunterdrückung erreicht wird, ohne die Symmetrie des Bussystems 5 negativ zu beeinflussen. Im dargestellten Ausführungsbeispiel sind vier weitere Sensoren 2 bis n vorgesehen, bei denen die Nebenstellenleitungen 6 aufgrund der vorbeschriebenen Übertragertechnik durchaus Längen von 100m aufweisen können.

Somit können die zweiten Sensoren 2 bis n problemlos bis zu 100m entfernt vom ersten Sensor 1 innerhalb des Gebäudes angeordnet bzw. installiert werden.

## Patentansprüche

1. Sensorkombination für Bussysteme der Gebäudesystemtechnik mit einem in einer ersten Unterputzinstallationsdose unterbringbaren ersten Sensor (1), welcher zum einen über einen Busankoppler (4) mit dem Bussystem des Gebäudes in Verbindung bringbar ist, und welcher zum anderen mehrere Bedien- und/oder Anzeigeelemente aufweist und welcher datentechnisch mit zumindest einem weiteren Sensor (2 bis n in Verbindung steht, der zur Verbindung mit dem Bussystem des Gebäudes den Busankoppler des ersten Sensors (1) ausnutzt, **dadurch gekennzeichnet, dass** der Busankoppler (4) auf einer einzigen, auch die anderen elektronischen Funktionsbauteile des ersten Sensors (1) aufnehmenden Leiterplatte (7) angeordnet ist, und dass der zumindest eine weitere Sensor (2 bis n) unter Ausnutzung des auf der einzigen Leiterplatte (7) des ersten Sensors (1) angeordneten Busankopplers (4) an das Bussystem (5) des Gebäudes anbinbar ist.

2. Sensorkombination nach Anspruch 1, **dadurch gekennzeichnet, dass** zur Anbindung zumindest des einen weiteren Sensors (2 bis n) an das Bussystem (5) des Gebäudes unter Ausnutzung des Busankopplers (4) des ersten Sensors (1) zwischen dem ersten Sensor (1) und zumindest dem weiteren Sensor (2 bis n) zumindest eine leitungsgebundene Verbindung besteht.

3. Sensorkombination nach einem der Ansprüche 1 oder 2, **dadurch gekennzeichnet, dass** zur Anbindung zumindest des einen weiteren Sensors (2 bis n) an das Bussystem (5) des Gebäudes unter Ausnutzung des Busankopplers (4) des ersten Sensors (1) zwischen dem ersten Sensor (1) und zumindest dem weiteren Sensor (2 bis n) zumindest eine funktechnische Verbindung besteht.

4. Sensorkombination nach einem der Ansprüche 1 bis 3, **dadurch gekennzeichnet, dass** zur leitungsgebundenen Verbindung zwischen dem ersten Sensor (1) und zumindest dem weiteren Sensor (2 bis n) eine Leitungsschnittstelle (9) zum Anschluss von Nebenstellenleitungen (6) auf der einzigen Leiterplatte (7) des ersten Sensors (1) vorhanden ist.

5. Sensorkombination nach einem der Ansprüche 1 bis 4, **dadurch gekennzeichnet; dass** zur funktechnischen Verbindung zwischen dem ersten Sensor (1) und zumindest dem weiteren Sensor (2 bis n) zumindest eine Funkschnittstelle auf der einzigen Leiterplätte (7) des ersten Sensors (1) vorhanden ist.

6. Sensorkombination nach einem der Ansprüche 1 bis 5, **dadurch gekennzeichnet, dass** der Busankoppler (4) des ersten Sensors (1) einen symmetrischen Aufbau aufweist.

## Claims

1. Sensor combination for bus systems in building system engineering with a first sensor (1) which is capable of being accommodated in a first flush-type installation box and which can be connected on the one hand by way of a bus coupling unit (4) to the bus system of the building, and which on the other hand features several operating and/or display elements, and which is connected via data link to at least one other sensor (2 to n) that takes advantage of the bus coupling unit of the first sensor (1) to connect to the bus system of the building, **characterised in that** the bus coupling unit (4) is located on a single printed circuit board (7) which also accommodates the other electronic functional components of the first sensor (1), and that the at least one further sensor (2 to n) is capable of bring connected to the bus system (5) by utilising the bus coupling unit (4) located on the single printed circuit board (7) of the first sensor (1).

2. Sensor combination in accordance with Claim 1, **characterised in that** there is at least one mains-linked connection between the first sensor (1) and the at least one further sensor (2 to n) for connecting the at least one further sensor (2 to n) to the bus system (5) of the building, taking advantage of the bus coupling unit (4) of the first sensor (1).

3. Sensor combination in accordance with either of Claims 1 or 2, **characterised in that** there is at least one radio connection between the first sensor (1) and the at least one further sensor (2 to n) for linking the at least one further sensor (2 to n) to the bus system (5) of the building, taking advantage of the bus coupling unit (4) of the first sensor (1).

4. Sensor combination in accordance with any of Claims 1 to 3, **characterised in that** a line interface (9) for connecting subsidiary lines (6) is provided on the single printed circuit board (7) of the first sensor (1) for establishing a line connection between the first sensor (1) and the at least one further sensor (2 to n) on the single printed circuit board (7) of the first sensor (1).

5. Sensor combination in accordance with any of Claims 1 to 4, **characterised in that** at least one radio interface is provided on the single printed circuit board (7) of the first sensor (1) for ensuring the radio connection between the first sensor (1) and the at least one further sensor (2 to n).

6. Sensor combination in accordance with any of Claims 1 to 5, **characterised in that** the bus coupling unit (4) of the first sensor (1) features a symmetrical structure.

## Revendications

1. Combinaison de capteurs pour systèmes bus de la gestion technique du bâtiment avec un premier capteur (1), pouvant être incorporé dans une première boîte de branchement encastrée, qui peut être connecté d'une part via un coupleur bus (4) au système bus du bâtiment et qui d'autre part présente plusieurs éléments de commande et/ou d'affichage et qui est raccordé informatiquement avec au moins un autre capteur (2 à n) qui utilise le coupleur bus du premier capteur (1) pour la connexion au système du bâtiment, **caractérisée en ce que** le coupleur bus (4) est disposé sur une unique carte imprimée (7) logeant aussi les autres composants fonctionnels électroniques du premier capteur (1) et qu'au moins un autre capteur (2 à n) peut être raccordé au système bus (5) du bâtiment en utilisant le coupleur de bus (4) disposé sur l'unique carte imprimée (7) du premier capteur (1).

2. Combinaison de capteurs selon revendication 1, **caractérisée en ce qu'**il existe au moins une connexion reliée par câble pour le raccordement au minimum de l'un des autres capteurs (2 à n) au système bus (5) du bâtiment, en utilisant le coupleur bus (4) du premier capteur (1), entre le premier capteur (1) et au moins un autre capteur (2 à n).

3. Combinaison de capteurs selon revendication 1 ou 2, **caractérisée en ce qu'**il existe au moins une connexion radio pour le raccordement au minimum d'un autre capteur (2 à n) au système bus (5) du bâtiment, en utilisant le coupleur bus (4) du premier capteur (1), entre le premier capteur (1) et au moins l'autre capteur (2 à n).

4. Combinaison de capteurs selon revendication 1 à 3, **caractérisée en ce qu'**il existe une interface de câble (9) pour le raccordement de câbles de postes secondaires (6) sur l'unique carte imprimée (7) du premier capteur (1) pour la connexion par câble entre le premier capteur (1) et au moins l'autre capteur (2 à n).

5. Combinaison de capteurs selon revendication 1 à 4, **caractérisée en ce qu'**il existe au moins une interface radio sur l'unique carte imprimée (7) du premier capteur (1) pour la connexion entre le premier capteur (1) et au moins l'autre capteur (2 à n).

6. Combinaison de capteurs selon revendication 1 à 5, **caractérisée en ce que** le coupleur bus (4) du premier capteur (1) présente une structure symétrique.
